(19) Europäisches Patentamt
European Patent Office
Office européen des brevets

(11) **EP 2 637 253 A1**

(12) **EUROPEAN PATENT APPLICATION**
published in accordance with Art. 153(4) EPC

(43) Date of publication:
**11.09.2013  Bulletin 2013/37**

(21) Application number: **11871290.0**

(22) Date of filing: **29.12.2011**

(51) Int Cl.:
**H01Q 19/17** (2006.01)     **G02B 5/12** (2006.01)
**G10K 11/28** (2006.01)

(86) International application number:
**PCT/RU2011/001041**

(87) International publication number:
**WO 2013/028099 (28.02.2013 Gazette 2013/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Quantrill Estate Inc.
Tortola (VG)**

(72) Inventor: **KOMRAKOV, Evgeny Vyacheslavovich
St. Peterburg 198147 (RU)**

(74) Representative: **Bucher, Ralf Christian
Patentanwalt Dipl.-Ing.
Alte Landstrasse 23
85521 Ottobrunn (DE)**

(54) **UNIVERSAL DEVICE FOR ENERGY CONCENTRATION**

(57)     The invention relates to the field of antenna engineering and may be used in various devices operating in a broad range of wavelengths, including visible, ultraviolet, infrared, shortwave, microwave, and ultra-short wave, etc. The technical result achieved by using the present invention lies in the multifunctionality, compactness, durability, efficiency and effectiveness of the device. This technical result is achieved by the fact that in the universal device for energy concentration, which contains a reflector and an emission source or receiver, the reflector is in the form of at least part of a surface of a solid of revolution, and the emission source or receiver is in the form of a distributed system of active or passive elements accordingly, positioned at an equal distance from the reflector, which constitutes 0.3 - 0.5 of the radius of curvature thereof. Moreover, the reflector may be in the form of a cylindrical surface or a segment thereof, or in the form of a spherical surface or a truncated segment thereof, or the cross-section of the reflector may be in the form of a circular arc in a first plane and second degree curves in planes perpendicular to said first plane, or an offset section of a sphere or a parabola may be used in a vertical plane. Furthermore, the surface of the reflector may be in the form of a solid of revolution which, in cross-section, comprises two ellipses joined in such a way that one focus of each of the ellipses coincides with the axis of the solid of revolution, wherein the distributed system of active or passive elements is mounted at the other focus of the ellipse.

Fig.1

## Description

### FIELD OF THE INVENTION

The invention relates to antenna design and can be used in a variety of devices operating within a wide waveband range, including visible, UV, IR, shortwave, UHF, and VHF.

### BACKGROUND OF THE INVENTION

Various prior art devices are used to concentrate energy. In particular, the radiation concentrator described in Patent SU 1,819,488 published on May 20, 1995, is designed as a paraboloid having a back surface that reflects radiation in the direction of the device axis and a hemispherical lens recessed in the front surface of the device, and an emitting crystal in a common focus of the lens and reflector. Another radiant energy concentrator described in Inventor's Certificate SU 945,839 published on July 23, 1982 comprises a linear source and a curved reflector.

The prior are concentrators are disadvantageous because of their relatively low efficiency.

The device of Patent RU 2,206,158 published on June 10, 2003 is the closest related prior art of the claimed invention in the combination of essential features. The device comprises a main and an additional concentrator and an energy converter. The prior art device is disadvantageous because of its limited functionalities and low efficiency.

### SUMMARY OF THE INVENTION

It is common knowledge that there is a sustained trend in world practice today to replace powerful, wasteful, and short-lived lamps with distributed systems consisting of a plurality of light emitting diodes in the visible, ultraviolet, and infrared wavebands and a plurality of solid-state UHF elements in radar and communication systems in various electromagnetic and sonic wavebands.

It is an object of the claimed invention to develop a multifunctional small-size, longlived, economical, and efficient device capable of illuminating, irradiating, heating or hearing a broad sector of up to 120° in both planes at the same time.

The practical technical result of the claimed invention is a small-size, multipurpose, and multifunctional device of a size similar to that of existing headlights, searchlights, lamps, communication antennas, radars, and other lighting, irradiating or receiving systems operating within a sufficiently narrow directivity pattern. The device emits light and radiation, or receives both, within a wide directivity pattern up to 120°×120° at a sufficiently high antenna amplification factor (antenna gain) in each direction.

The above technical result is achieved in a multipurpose energy concentrator comprising a reflector and a radiation source or receiver, the reflector being at least a part of the surface of a solid of revolution, and the radiation source or receiver being a distributed system of active or passive elements, respectively, located at an identical distance from the reflector equal to between 0.3 and 0.5 of the curvature radius thereof. Further, the reflector may be a cylindrical surface or a segment thereof, or a spherical surface or a truncated segment thereof, or the cross-section of the reflector in one, first plane may be an arc of a circle, and in the planes normal to the first plane it is formed by second-order curves, or an offset part of a sphere or parabola may be used in the vertical plane. Also, the reflector surface may be a solid of revolution that is represented in cross-section by two ellipses joined in such a manner that one focus of each sector is at the axis of the solid of revolution, the distributed system of active or passive elements being placed in the other focus of the ellipse.

The above technical result may also be achieved in a distributed system having active elements of different power ratings. Continuously operating irradiators or receivers may be used as active or passive element therein. Besides, the device may further be provided with at least one reflector and at least one radiation source or receiver; the radiation source or receiver may rotate; and the reflector and radiation source or receiver may rotate simultaneously.

As a rule, the reflector or the antenna is designed as an area of a truncated spherical surface, or a complex surface that is a cylindrical surface in one plane and a parabolic or elliptical surface in the other plane. In some devices, a cylindrical reflector may be used. Another shape may also be used in either of the planes to produce the desired directivity pattern.

An actually continuous line of active or passive elements (light-emitting diodes in the visible, UV, and IR wavebands, solid-state UHF elements, IR radiation and ultrasonic radiation sources, microphones, and so on) may be used as radiation sources or receivers. A continuous line having a single transceiver or receiver may be used to facilitate simultaneous operation in a wide directivity pattern in the UHF waveband. In the IR waveband, a continuous radiation source may be used in place of a line of elements. The active or passive elements having specified dimensions are positioned at a specified distance somewhat closer to the antenna or reflector than half of the radius of a sphere or cylinder and in the parabola or ellipse focus to produce an effective antenna aperture for each element.

### BRIEF DESCRIPTION OF THE DRAWINGS

The invention is illustrated by the accompanying drawings wherein:

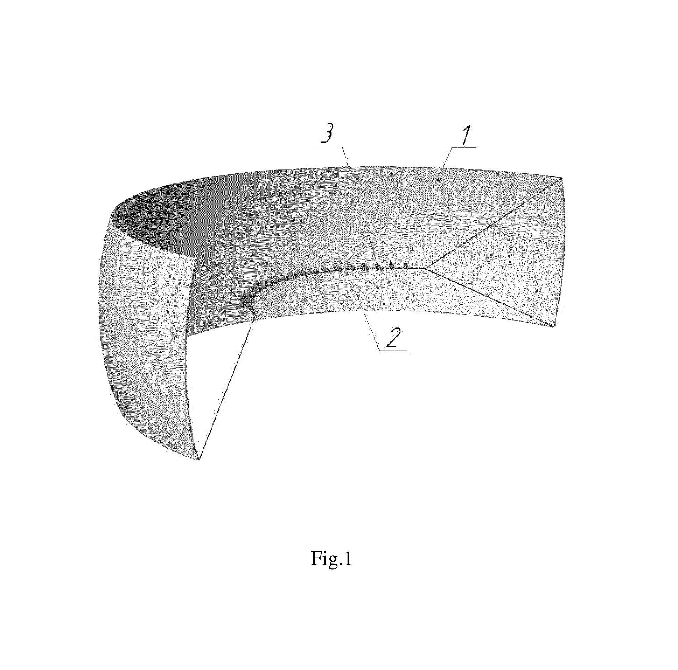

FIG. 1 is a general view of the device;

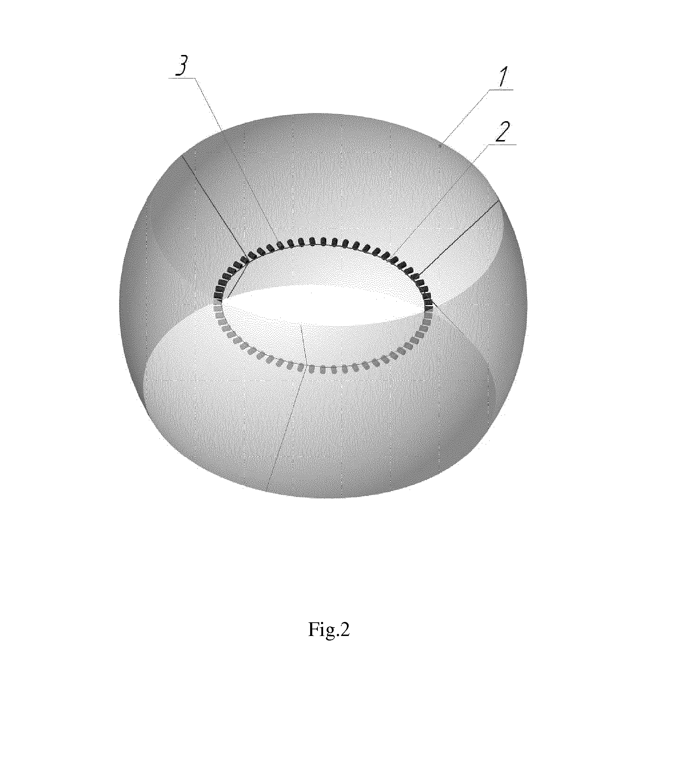

FIG. 2 is a general view of the device with a reflector or antenna in the shape of a truncated spherical surface, and with radiation sources or receivers in the form of a line of elements;

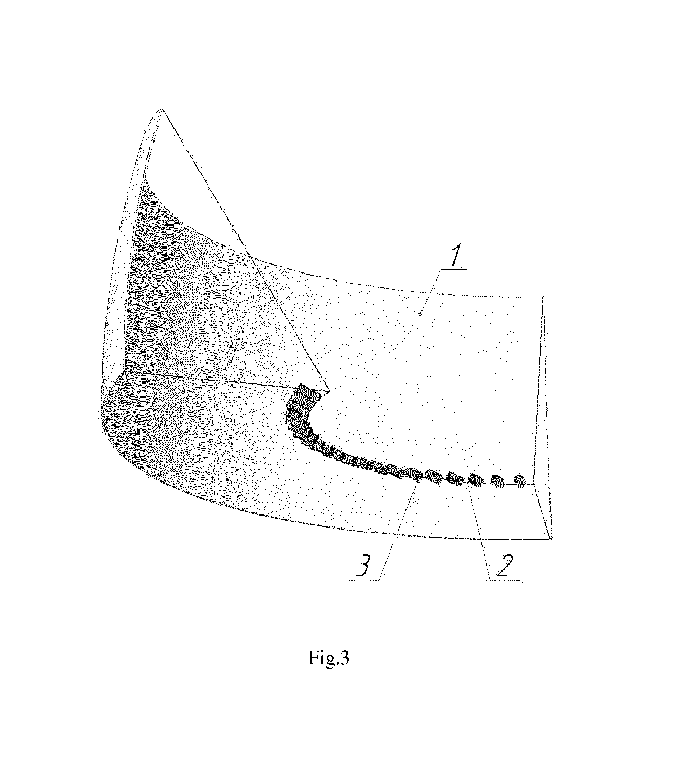

FIG. 3 is a general view of the device using an offset part of a sphere or a parabola;

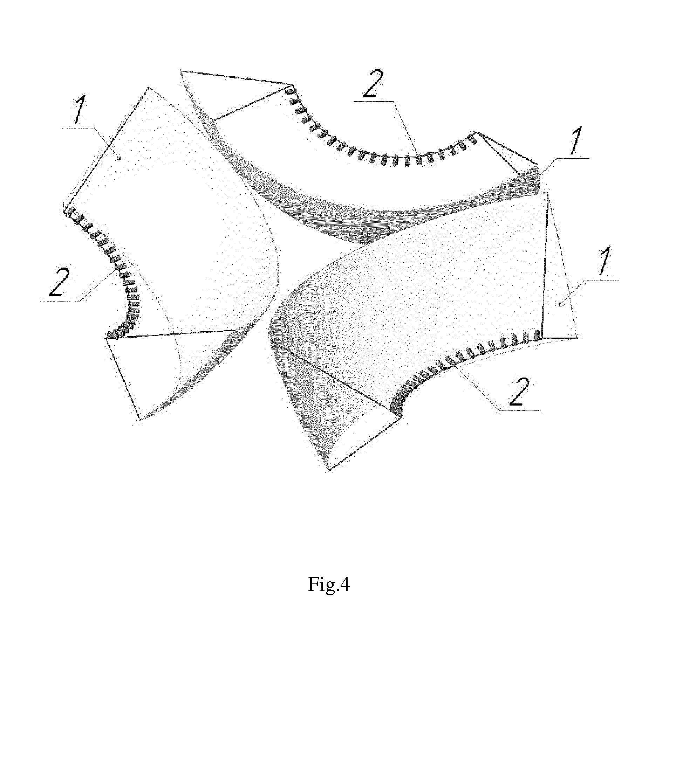

FIG. 4 is a general view of the device comprising three antennas of an omnidirectional receiver, or an omnidirectional device to receive and transmit information, or a device having a circular directivity pattern;

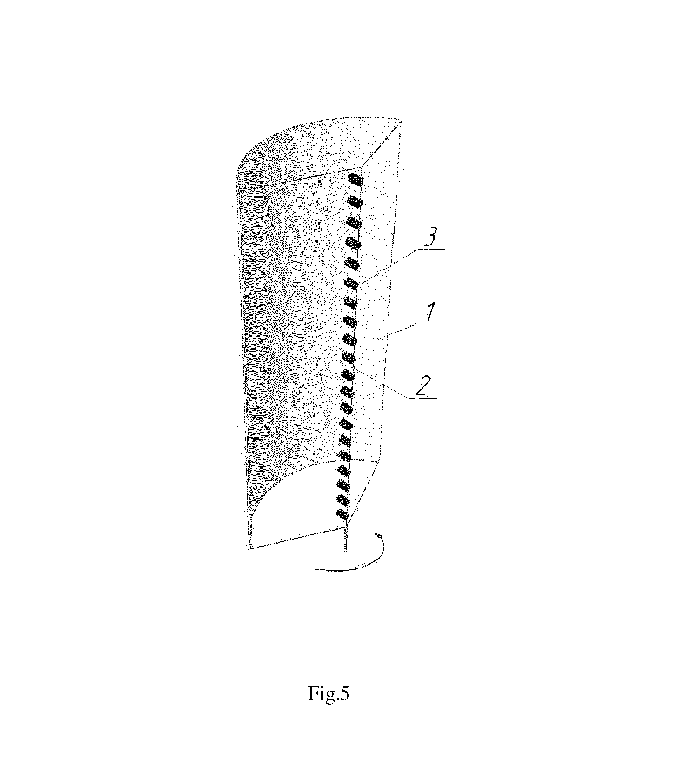

FIG. 5 is a general view of the device having a rotary vertical cylindrical antenna and an active phased antenna line;

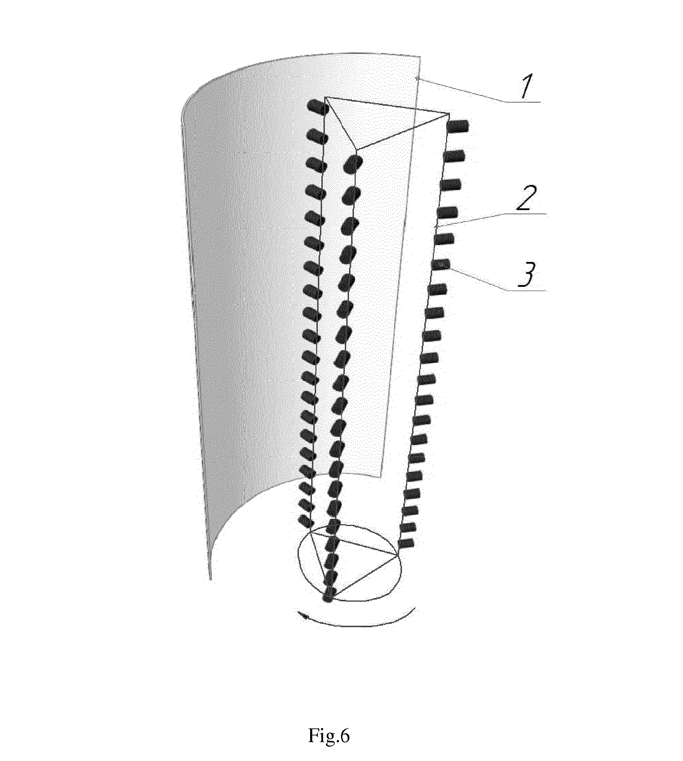

FIG. 6 is a general view of the device having a fixed vertical cylindrical antenna and three rotary active phased antenna lines; and

FIG. 7 illustrates calculation of the focal distance of a concave spherical or cylindrical antenna.

DESCRIPTION OF PREFERRED EMBODIMENTS

The device is operated as follows:

A practically continuous line of active or passive elements, respectively, are placed at a minimum distance from one another at a distance from the reflector or antenna equal to 0.3 to 0.5 of the radius of the antenna surface curvature, each of said elements emitting to, or receiving from, a part of the sphere or cylinder 1.

The number of active or passive elements may be sufficiently large, in which case a sufficiently large part of the spherical or cylindrical antenna will be used as many times as there are such elements.

When the device is used for concentrating X-ray, UV, visible, IR, UHF, VHF, shortwave, ultrasonic or sonic radiation, it is preferable to use an antenna in the shape of a truncated part of a spherical surface, or a cylinder in one plane and a parabola or an ellipse in the other plane, or ordinary cylinders having a radius of 20 mm to several hundred meters. The antenna sector in both planes may range from 20° to 360°. Active or passive elements in the sonic, ultrasonic, shortwave, VHF, UHF, IR, visible, UV or X-ray wavebands may be used as such line. A line of individual elements may also be replaced with a single continuous element connected to one active or passive emitter or receiver in any waveband. Several lines of individual elements or several continuous linear elements, or any other configuration may be used in place of a single line in a reflector and an antenna of certain dimensions. Elements of different power ratings may be used to achieve a desired directivity pattern in a horizontal plane, and another shape intermediate between a sphere, parabola or ellipse and a straight line in the case of a cylinder may be used to achieve a desired directivity pattern in either of the planes.

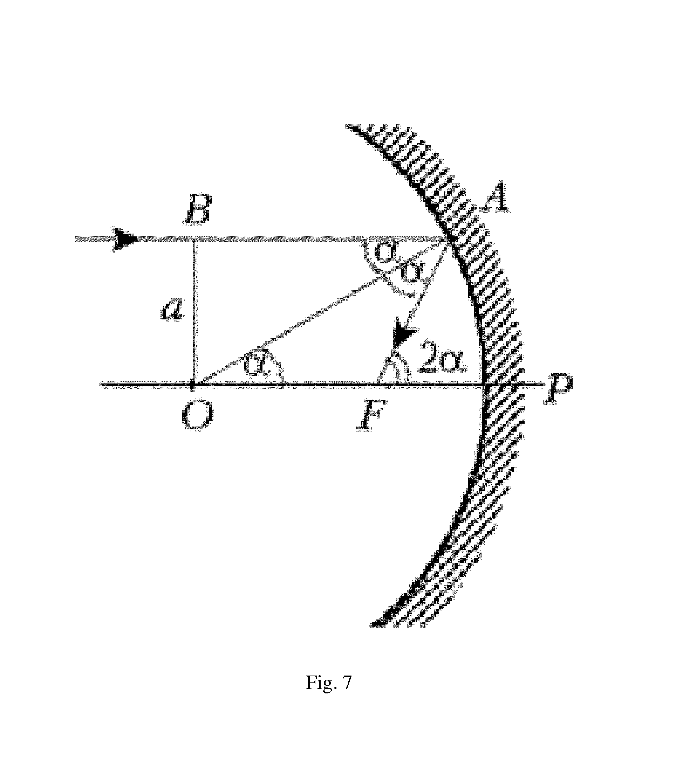

FIG. 7 illustrates calculation of a focal distance FP of a concave spherical or cylindrical antenna of a radius R for a beam striking the antenna in parallel with the principal optical axis thereof at a distance $a$ therefrom. The geometrical configuration of the problem is clear from the drawing. In an isosceles triangle AOF, the side OF is easily represented as base OA = R and its angle

$$\alpha: \quad OF = \frac{R}{2\cos\alpha}.$$

The right-angled triangle OBA gives:

$$\cos\alpha = \frac{AB}{R} = \frac{\sqrt{R^2 - a^2}}{R}.$$

In which case

$$OF = \frac{R^2}{2\sqrt{R^2 - a^2}}.$$

The unknown focal distance from point F to pole P:

$$FP = R - OF = R\left(1 - \frac{R}{2\sqrt{R^2 - a^2}}\right).$$

This is an equation for the focal zone of a cylindrical or spherical antenna. The longer the distance from the principal optical axis to the parallel beam $a$, the farther the focus moves toward the antenna. Where an active or a passive element has definite geometrical dimensions, it may be placed closer to the antenna at a calculated distance from half-radius, depending on the size of the radius and geometrical dimensions of the element. The above formulae apply to a single principal optical axis. In a cylinder or sphere, as is the present case, there may be a multitude of principal optical axes from the center of a cylinder or sphere to the surface within the angular aperture of an antenna.

Radiation or reception by each individual active or passive element of the line to or in its area of a spherical or cylindrical antenna having its own principal optical axis permits a wide fan directivity pattern to be produced in one of the planes in which each element operates in its sector independently from another in an area of the reflector or antenna equal approximately to the radius of the sphere or cylinder. By analogy with a traditional radar having a single UHF irradiator and a single antenna, for example, the claimed device having a cylinder radius of 250 mm, a height of 250 mm, and frequency of 9 GHz can take around 20 irradiators measuring 14 mm, each engaging a part of the sphere or cylinder measuring approximately 250×250 mm. A 250×250 mm antenna will, therefore, be used at least 20 times. If 20 antennas are used, each measuring 250×250 mm and having a separate element placed in the focus thereof and a directivity pattern approximately 8° each in a horizontal plane, a combined 120° sector will be illuminated with an overlap. The antenna will in this case have an overall size of 5×0.25 m, while the antenna of the claimed device will only measure 0.5×0.25 m, or 10% as large, and show approximately the same performance.

Where it uses light-emitting diodes in the visible, UV, and IR wavebands, the claimed device can be used effectively in searchlights, streetlamps, industrial and household lamps, lamps for plant growing, and other lighting devices intended for uniform illumination or heating of large areas when the reflector is in the shape of a cylindrical surface (with a lighting aperture of up to 120°×120°), or for concentrated illumination in a sector of up to 120° in a horizontal plane and a sufficiently narrow directivity pattern in a vertical plane (for example, in control systems, sweep searchlights, low-beam headlights of automobiles, sea and river buoys and lighthouses in the visible waveband, devices for disinfecting water, air, and seeds, and sunrooms in the UV waveband, and systems for heating water, heating, and backlighting in the IR waveband, and in systems for mixing, cleaning, laundering, and processing liquids in the ultrasonic waveband), when the reflector is in the shape of the truncated part of a spherical surface, or a cylindrical surface in one plane and a parabolic or elliptical surface in the other plane.

When used in the UV waveband, this device permits uniform concentrated radiation to be directed at the target (human, running water, air flow, seeds, and so on) from three or four directions, using concentrated radiation of distributed lines of economical and long-lasting light emitting diodes in the UV waveband in place of powerful, wasteful, and unreliable UV lamps. A similar device having a distributed continuous IR radiation source in place of a line can be used for heating running water in the IR waveband.

Several antennas can be replaced with a single circular antenna in the shape of a full or truncated sphere, or a common cylinder, or a cylinder in one plane and a parabola or an ellipse in the other plane. In this case, the line of emitters or a continuous emitter will be 360° circular as well. Where a parabola is used, the line is to be positioned a little closer than the half-radius of a cylinder and in the parabola focus, and when an ellipse is used, it is placed in either of the ellipse foci, and the other focus thereof is placed in the cylinder center. In this case, a high concentration of UV and IR radiation, or radiation in any other wavebands is reached in the central part of the device where an object to be treated is placed.

To further increase radiation concentration for the same small size, three circular antennas with three lines of elements as described above can be used, provided that the elements are arranged along the coordinate axes in all three planes. As a result, the common focal zone will consist of three intersecting focal zones in three planes.

A device having a single antenna and a continuous IR radiation source in place of a line can be used in heating systems, and where it is a line of IR diodes of desired wavelength, it can be used for infrared backlighting within a wide waveband of up to 120°. Where a line of photosensitive elements in the IR, UV or X-ray waveband is placed in the antenna described above, the result is a small-size night-vision device operating within an up to 120° wide sector in the horizontal plane.

In the sonic waveband, a line of sensitive microphones placed in the focal zone of the line produces a long-range sound sensor operating within an up to 120° wide horizontal sector capable of detecting with sufficient accuracy the direction of the sound source and processing each channel separately.

In the ultrasonic waveband, where a line of vibrators is used in the focal zone, its concentrated radiation can be used in systems for preparing homogeneous mixtures, cleaning, laundering, and liquid processing, and in devices for scaring off animals and insects, and so on.

Where this technology is used in lamps for growing plants, three lines of light-emitting diodes - two red lines and one blue line - may be used to produce mixed light most effective for plant growth.

Where the claimed device is used in low-beam headlights of an automobile, it permits the driver to see ahead, which is normal for one-lamp system having a reflector that is used in a majority of present-day automobiles, and produces side lighting in a sector up to 120° wide. By selecting the power of light-emitting diodes in the line, a preferred directivity pattern in the horizontal plane can be obtained, with the high-powered light-emitting diodes for lighting directly ahead, less powerful diodes for lighting at the right, and very low-powered LEDs for lighting at the left (in right-side traffic). The above technology can improve significantly road traffic safety in darkness. A similar device can be used in radar systems that will be installed on automobiles or any other moving objects to automate traffic safety monitoring. In this case, too, a desired radar directivity pattern can be obtained by selecting the power of solid-state UHF elements.

Where this device is used in sea and river buoys and lighthouses, three reflectors may be used to produce a circular pattern in the horizontal plane and a sufficiently narrow pattern in the vertical plane. Since the light output of this design is higher than that of light-emitting diodes alone, the total required power is lower, which is an important advantage because a majority of buoys and lighthouses are fully autonomous.

It is an important advantage of the claimed device when it is used in radar systems because the radar can irradiate continuously in a pattern up to 120° wide, offering an opportunity to illuminate a target within the pattern. In turn, the Doppler component of the signal reflected from the target can be processed more thoroughly and information accumulated for a considerable length of time. Where rotating or scanning radars having a narrow directivity pattern and, especially, radars having a pencil pattern such as phased arrays are used, the radar beam locks on the target for a very limited time that is not always enough for information to be accumulated and the Doppler component of the signal processed. The radar of the aforesaid design is very efficient in detecting moving targets, particularly targets moving at a low speed. In this case, there is enough time to process thoroughly the Doppler component of the signal from a target, for example, to detect individual specifics (such as the difference between the steps of a man and a woman). This thorough processing cannot be done by a fast scanning beam. The energy potential of a radar of the above-described design compares well with a scanning radar of the same power because the target irradiation time is in direct proportion to radiation power, and the effective total area of the antenna system is larger. Radar systems can use the offset part of a parabola or sphere to remove the emitters from the antenna aperture.

The existing antennas of cellular network base stations are sufficiently large vertically and small horizontally because they have to provide a wide directivity pattern of up to 120° in the horizontal plane and a sufficiently narrow pattern of around 10° in the vertical plane. The antenna gain in this case is sufficiently low, around 30. Where a device comprising three antennas in the form of the truncated part of a spherical surface, or cylindrical in the horizontal plane and parabolic in the vertical plane 1 is used at cellular network base stations for circular scanning, the antenna gain is many times larger, up to 350. This gain will, in turn, increase significantly the transmission and reception range. The antenna may have a size of approximately 1×2 meters for a 120° sector. The antenna will then have a general pattern of 120°×10°, similar to existing antennas, but the active antenna aperture in each direction is approximately 1×1 meters large and have a pattern of approximately 10×10 degrees. A longer communication range may reduce the number of base stations required and cut cellular network deployment costs.

The claimed device can be used to receive satellite television signals and in satellite communications without requiring an antenna to be positioned accurately. A satellite antenna having a directivity pattern of up to 120°×120° may be in the form of a cylinder. In this case, there is no need at all, or the need is reduced significantly, for very expensive gyrostabilizers to be used with an antenna installed on moving objects. An antenna of this type may also be very efficient on communication or Internet satellites in low orbits. Three antennas of this type used with a single receiver or transceivers having a continuous reception or reception-transmission line are enough for omnidirectional reception of satellite television programming and omnidirectional satellite communication, including the satellite Internet, independently from the satellite and only requiring the reception frequency to be changed. A device of this type provided on a stationary or moving object is particularly efficient when the satellite Internet uses low-orbit fast-speed satellites, with the line of sight changing continuously.

The claimed device may also be used on stationary and moving objects in ground wideband communication systems such as Wi-Max, in ground digital television, and other systems.

If produced in quantity, these antenna devices, even those comprising three antennas, will be sufficiently inexpensive.

In another application in radar, the device is used in the form of a common cylinder in a vertical plane 1 placed at a distance of 0.3 to 0.5 of the radius of its active phased antenna line (APAL) 2 comprising individual solid-state UHF receiver-transmitter modules (RTM) placed at a distance of around a half wavelength from one another. They permit electron scanning of the directivity pattern in the vertical plane to control RTM phases and the system as a whole can be rotated in the horizontal plane. In this case, a three-coordinate radar is produced.

In another embodiment, a system has a fixed cylinder 1 and an APAL 2 moving along a path more than a half of the cylinder radius. Where the cylinder has a geometry permitting 120° radiation in the horizontal plane, three APALs 2 can be arranged over the circumference thereof at an angle of 120°, and when the system obtained is rotated slowly in one direction it provides a continuous view of the space in front of it within a 120° sector. This design is most advantageous in decimeter wavelength radars (wavelength of 30 centimeters or more), and particularly in the meter waveband. A large number of RTMs is required to set up active phase antenna arrays (APAA), at a high cost and with attending cooling and other problems, within these wavebands to achieve good resolution and a high antenna gain. The claimed device can achieve a high antenna gain and good resolution with a small number of RTMs at relatively low costs. Moreover, no special cooling devices are required, even if the RTMs have a power several times that of an APAA. An RTM is in operation for only 7% of the time at an on-off ratio of 5 because one of the three APALs operates for only a third of the time and is passive for the rest of the time (240°).

For a wavelength of, for example, 30 cm, 64 RTMs will have to be provided in a single APAL to achieve a 2°x2° resolution, or 192 RTMs in three APALs. This arrangement gives a 2°x2° pencil pattern rotating in the horizontal plane and providing electron phase scans in the vertical plane. The radius of a cylindrical vertical antenna in this case is around 10 m, approximately 15 m high, APAL height of 10 m, and radius of APAL rotation a little over 5 m. In comparison, 3,500 RTMs for an APAA will be needed to obtain this resolution and antenna gain.

Where a 1°×1° resolution is to be achieved, 128 RTMs have to be placed in a single APAL (384 RTMs in three APALs in all) on a 20 m length, the radius of the cylindrical antenna increased to 20 m, its height to 30 m, and APAL radius of revolution be in excess of 10 m. An APAA of this size would require almost 14,000 RTMs that would take in too much material and, as a result, be inefficient.

The claimed device is inferior to an APAA in total peak power, and yet, as is known, an increase in the antenna gain influences the total energy potential of radar doubly as efficiently as the power increase.

The cylinder may have a radius of up to 100 m in the meter waveband. Antennas for use in this waveband may also be designed as nets. A device having three APALs may rotate on rails placed in a circle.

INDUSTRIAL APPLICABILITY

The invention may be used in various visible waveband devices such as searchlights, headlights, streetlamps, household lamps, and lamps for growing plants; or for disinfecting water and seeds and in sunrooms in the UV waveband; in heating and drying systems, water heating, and infrared backlighting systems in the IR waveband; in the UHF and VHF wavebands, in radar and communication technologies, in particular, for satellite television and the Internet, in base stations of cellular communication systems, in ground wideband communication systems of the Wi-Max type, in ground digital telecasting; in the UV, IR, and X-ray waveband in night-vision devices; in the sonic waveband in remote sound sensors; in the ultrasonic waveband in homogeneous mix preparation, cleaning, laundering, and liquid treatment systems; in devices to scare away animals and insects, and in many other devices in any electromagnetic, ultrasonic, and sonic wavebands. A small-size device, the invention may be used for irradiation within a broad sector of up to 120° vertically and horizontally at a sufficiently large antenna gain in each direction.

**Claims**

1. A multipurpose energy concentrator comprising a reflector in the form of at least a part of the surface of a solid of revolution, a radiation source or a receiver, as a distributed system of active or passive elements, respectively, positioned at an identical distance from the reflector equal to 0.3 to 0.5 of the radius of curvature thereof.

2. A multipurpose energy concentrator of claim 1, wherein the reflector is a cylindrical surface or a segment thereof.

3. A multipurpose energy concentrator of claim 1, wherein the reflector is a spherical surface or a truncated segment thereof.

4. A multipurpose energy concentrator of claim 1, wherein the cross-section of the reflector in one, first plane is an arc of a circle, and second-order curves in the plane normal to the first plane.

5. A multipurpose energy concentrator of claim 1, wherein the offset part of a sphere or parabola is used in the vertical plane thereof.

6. A multipurpose energy concentrator of claim 1, wherein the reflector surface is a solid of revolution consisting in cross-section of two ellipses joined such that each of the ellipses has one of its foci at the axis of the solid of revolution and the other focus of the ellipse is used for a distributed system of active or passive elements to be placed therein.

7. A multipurpose energy concentrator of claim 1, wherein the active elements of the distributed system have different power ratings.

8. A multipurpose energy concentrator of claim 1, wherein continuous-action irradiators or receivers are used as active or passive elements.

9. A multipurpose energy concentrator of claim 1, further having at least one reflector and at least one radiation source or receiver.

10. A multipurpose energy concentrator of claim 1, wherein said radiation source or receiver are rotatable.

11. A multipurpose energy concentrator of claim 1, wherein the reflector and radiation source or receiver can rotate simultaneously.

Fig.1

EP 2 637 253 A1

Fig.2

8

Fig.3

Fig.4

Fig.5

Fig.6

Fig. 7

## INTERNATIONAL SEARCH REPORT

| | International application No. |
|---|---|
| | PCT/RU 2011/001041 |

| A. CLASSIFICATION OF SUBJECT MATTER |
|---|
| H01Q 19/17 (2006.01); G02B 5/12 (2006.01); G10K 11/28 (2006.01) |
| According to International Patent Classification (IPC) or to both national classification and IPC |

| B. FIELDS SEARCHED |
|---|
| Minimum documentation searched (classification system followed by classification symbols) |
| H01Q 19/00-19/17, 3/00-3/12, 13/00, G01S 13/00-13/89, G02B 5/12, G10K 11/00-11/28 |

Documentation searched other than minimum documentation to the extent that such documents are included in the fields searched

Electronic data base consulted during the international search (name of data base and, where practicable, search terms used)

PatSearch (RUPTO internal), Esp@senet, PAJ, USPTO

| C. DOCUMENTS CONSIDERED TO BE RELEVANT | | |
|---|---|---|
| Category* | Citation of document, with indication, where appropriate, of the relevant passages | Relevant to claim No. |
| A | RU 2206158 C2 (FEDERALNOE GOSUDARSTVENNOE UNITARNOE PREDPRIYATIE "TSENTRALNY NAUCHNO-ISSLEDOVATELSKY INSTITUT MASHINOSTROENIYA") 10.06.2003, the abstract, fig. 1, p. 4, lines 1-7, p. 5, lines 5-24 | 1-11 |
| A | US 2009/0224993 A1 (MARKUS PEICHI et al.) 10.09.2009 | 1-11 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 August 2012 (28.08.2012) | 13 September 2012 (13.09.2012) |

| Name and mailing address of the ISA/ | Authorized officer |
|---|---|
| RU | |
| Facsimile No. | Telephone No. |

Form PCT/ISA/210 (second sheet) (July 1998)

**EP 2 637 253 A1**

**Patent documents cited in the description**

- SU 1819488
- SU 945839
- RU 2206158